# EUROPEAN PATENT APPLICATION

(11) **EP 1 302 449 A2**
(43) Date of publication of application: **16.04.2003**
(21) Application number: 02021813.7
(22) Date of filing: 27.09.2002
(51) Int. Cl.: C03B 37/012

(54) **Process and apparatus for overcladding a preform for optical fibres by plasma deposition of particles**

(30) Priority: 12.10.2001 US 975508
(71) Applicant: ALCATEL, 75008 Paris (FR)
(72) Inventor: Goudeau, Jacques, 69540 Irigny (FR); Fletcher, Daniel, Conover, NC 28613 (US); Charlton, Roger, Newton, NC 28658 (US)
(74) Representative: Dreiss, Fuhlendorf, Steimle & Becker

(57) **Abstract**

A preform overcladding device is provided. The preform overcladding device includes an injector for providing particles having a predetermined material, and a preheater for preheating the particles provided by the injector. The preform overcladding device also includes a heater for heating and depositing onto a preform the particles preheated by the preheater.

## Description

### BACKGROUND OF THE INVENTION

### Field of the Invention

The present invention relates to plasma deposition of particles onto a preform. More specifically, the present invention relates to spheroidizing the particles online prior to depositing the particles on the preform.

The present invention is useable with a process for manufacturing a preform from which optical fibers may be drawn. Such optical fibers are used in telecommunications and are generally drawn from a preform on which one or more layers of an overcladding material have been deposited. The present invention deposits such an overcladding material using, in part, a preheater for spheroidizing particles of the overcladding material, reducing a size distribution of the particles, and preventing undue contamination of the particles. The particles are preferably heated by the preheater prior to being deposited and fused onto the preform.

### Description of the Related Art

The preform is often constructed by depositing particles onto a primary preform through a process known as 'overcladding'. The primary preform may be overclad by injecting synthetic or natural quartz particles into a plasma plume using a carrier gas, then directing the particles onto the primary preform. The plasma plume further heats the particles deposited onto the primary preform and fuses the deposited particles into a generally homogenous overcladding layer around the primary preform.

The quality of the overcladding layer and the rate at which the overcladding layer is deposited are functions, in part, of the particles' size and shape distributions. For example, when the particles have a relatively large size distribution, relatively big particles may be incompletely molten when the particles are deposited onto the surface of the primary preform.
Consequently, the particles are not fused by the plasma torch and do not form a useful overcladding layer. By contrast, relatively small particles may be evaporated by the heat of the plasma plume, thereby decreasing the energy available for heating and fusing other particles, and decreasing the flow rate of particles deposited onto the primary preform. For at least the foregoing reasons, a relatively large particle size distribution reduces the effectiveness and efficiency of the overcladding process.

The particles' shape distribution also has an influence on the effectiveness and efficiency of the overcladding process. For example, randomly shaped particles can not be packed into a relatively dense layer onto the primary preform. In contrast, spherical particles can be efficiently packed into a relatively dense layer on the primary preform, and may then be readily fused into a generally homogeneous overcladding layer. A layer of densely packed spherical particles can thus be fused into an overcladding layer more effectively and efficiently than a layer of randomly sized particles.

The particles' size and shape distributions are generally a result of how the particles were created. Mechanical processing, such as crushing and grinding, is a conventional method of creating the particles to be deposited onto the primary preform. Particles produced by mechanical processing generally do not have a spherical shape or a uniform size, and must undergo additional processing to reduce the particles' size and shape distributions. Such additional processing may include mechanical sorting and chemical processing operations that may contaminate the particles, thereby reducing the optical quality and performance of the overcladding layer. Additional processing also increases the particles' manufacturing costs. Thus, controlling the particles' size and shape distributions is difficult and costly during the particles' manufacture, and further processing for reducing the particles' size and shape distributions often results in contamination of the particles.

In view of the proceeding discussion, a need exists for an apparatus and method for decreasing the size and shape distributions of particles to be overclad onto a primary preform. Further, a need exists for a method and apparatus for inexpensively reducing the particles' size and shape distributions without contaminating the particles.

### OBJECTS OF THE INVENTION

In a first aspect of the present invention, a preform overcladding device is provided and includes an injector for providing particles having a predetermined material. The preform overcladding device also includes a preheater for preheating the particles provided by the injector, and a heater for heating and depositing onto a preform the particles preheated by the preheater.

In another aspect of the present invention, a method for overcladding a preform is provided. The method includes the steps of injecting particles having a predetermined material and preheating the particles provided during the injecting step. The method further includes the step of heating and depositing onto a preform the particles preheated during the preheating step.

In yet another aspect of the present invention, a preform overcladding device is provided. The preform overcladding device includes an injecting mechanism for providing particles having a predetermined material, and a preheating mechanism for preheating the particles provided by the injecting means. The preform overcladding device also includes a heating mechanism for heating and depositing onto a preform the particles preheated by the preheating mechanism.

These and other objects, aspects, features and advantages of the present invention will become apparent from the following detailed description of the preferred embodiments taken in conjunction with the accompanying drawings.

### BRIEF DESCRIPTION OF THE DRAWINGS

Figure 1 is a plan view of a preferred embodiment of the present invention.
Figure 2 is a sectional view of a preform with overcladding layers deposited in accordance with the preferred embodiment of the present invention.
Figure 3 is a sectional view of features of the preferred embodiment of the present invention.
Figure 4 is an alternative embodiment of the injector 28 and the preheater 34.

### DETAILED DESCRIPTION OF THE INVENTION

As explained below in detail, preferred embodiments of the present invention provide an apparatus and method for depositing particles onto a preform using an overcladding unit with, among other features, a preheater for on-line spheroidization of the particles. Of course, the present invention should not be limited solely to such features. These and other features of the preferred embodiments of the present invention are described below with reference to the drawings.

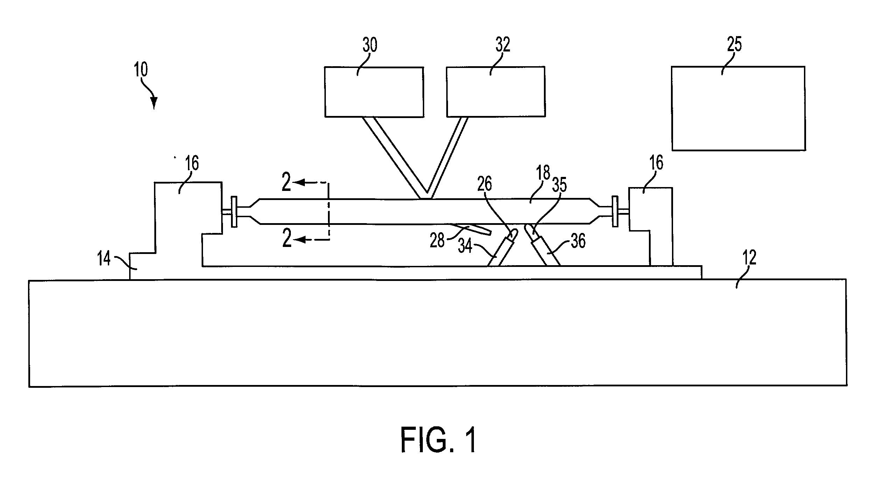

A preform overcladding unit 10 is illustrated in Figure 1. The preform overcladding unit 10 includes a preform support 12 having a centerpiece 14 having two opposing supports 16. During an initial overcladding operation, a preform 18 is mounted to the supports 16 such that the supports 16 rotate the preform 18 about the preform 18's longitudinal axis. By way of example, the supports 16 rotate the preform 18 with a rotational velocity of from approximately 1 to 50 revolutions per minute, and more preferably from 3 to 30 revolutions per minute. The preform support 12 may be, by way of example, a conventional overcladding glass working lathe.

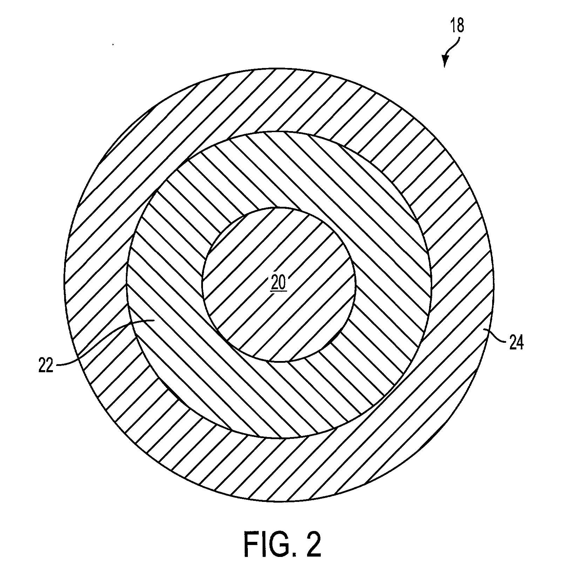

With reference to Figure 2, the preform 18 secured by the supports 16 includes a primary preform 20. An initial overcladding layer 22 and one or more subsequent overcladding layers 24 may be deposited onto the primary preform 20 in the manner discussed below. The primary preform 20 is preferably a solid, cylindrical rod of, for example, natural or synthetic silica glass. The primary preform 20 preferably has a length of from approximately .5 to 1.5 meters. The diameter of the primary preform 20 is preferably from approximately 15 to 40 millimeters. The primary preform 20 may have other dimensions while remaining within the scope of the present invention.

In Figure 1, the centerpiece 14 is carried and supported by the preform support 12 such that the centerpiece 14 moves from an initial position to a return position while the supports 16 rotate the preform 18 about the preform 18's longitudinal axis. Movement of the centerpiece 14 is controlled by a controller 25 such as a central processing unit having a memory with executable code. The controller 25 controls the centerpiece 14 by adjusting the speed and direction of revolution of a threaded rod (not shown) along which the centerpiece 14 travels. The speed and travel direction of the centerpiece 14 may be controlled by the controller 25 in accordance with, for example, the rotation speed of the preform 18, and the desired thickness of the preform 18. Of course, the speed and travel direction of the centerpiece 14 may be controlled by other structures and may be controlled in accordance with other parameters.

Centerpiece 14, and the preform 18, are moved past a depositing unit for depositing material onto the preform 18. The depositing unit includes an injector 28 for delivering particles entrained in a gas. The particles entrained in the gas are the particles to be fused onto the outer surface of the primary preform 20 to form the initial overcladding layer 22 and the subsequent overcladding layer 24. (See Figure 2). The particles are supplied to the injector 28 from a particle reservoir 30 such as a conventional hopper which, for example, feeds the particles onto a moving belt. The particles are then entrained in a gas stream supplied by a gas supply 32, such as a conventional compressor or other known gas supply, and the gas and particles mixture then exits the injector 28 toward a preheater 34 discussed below in detail. The particles may be, for example, grains of natural or synthetic silica or quartz having predetermined optical properties. Of course, the particles may contain a dopant of any other material, such as TiO₂ or Al₂O₃, and may have any desired physical properties. The gas is preferably air or a mixture of air, nitrogen and oxygen. The gas may also be air and a fluorinated or chlorinated gas, or even the fluorinated or chlorinated gas in a pure state, as disclosed in US Patent No. 6,269,663 to Drouart et al. incorporated herein, in its entirety, by reference. The fluorinated gas may be sulfur hexafluoride SF₆, or a Freon generally selected from those gasses authorized under European regulations, such as C₂F₆. The chlorinated gas may be chlorine gas Cl₂, for example. The gas is preferably delivered at a mass flow rate of from approximately 100 to 2000 cubic centimeters per minute (cm³/min.), and more preferably from to 200 to 1000 cm³/min. Of course, other suitable gasses and mass flow rates are considered to be within the scope of the present invention.

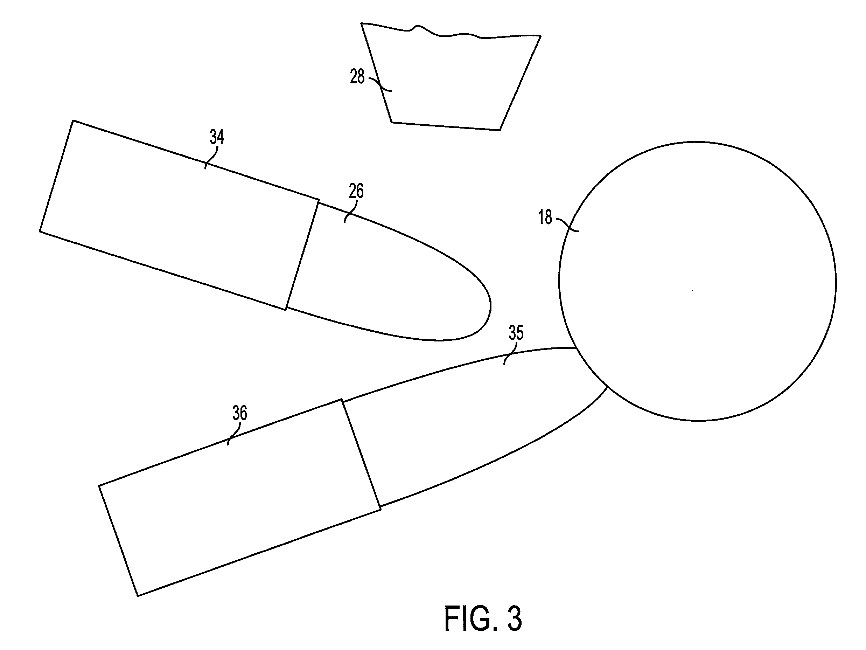

In a preferred embodiment illustrated in Figures 1 and 3, the preheater 34 is located near the injector 28 and provides a plume 26 of heat. The injector 28 injects the stream of gas and particles into the plume 26 to be heated, thereby reducing the size and shape distributions of the particles. Specifically, relatively small particles are evaporated when passing through the plume 26, and the remaining particles are heated to a spheroidization temperature. At the spheroidization temperature the surface of the particles are sufficiently melted so that surface tension of the individual particles draws the corresponding particle into a sphere. Thus, the relatively small particles are removed from the gas and particle stream, and the remaining particles undergo sphereoidization when passing through the plume 26 from the preheater 34. The particles' size and shape distributions are thereby decreased. Further, contamination of the particles and the initial overcladding layer 22 is prevented because the preheater 34 sphereoidizes the particles during the actual overcladding process, rather than using mechanical or chemical processes prior to the overcladding process.

In a preferred embodiment, the preheater 34 is a plasma torch and supplies a plume 26 having a temperature of from, for example, 2000 to 5500° Celsius. By way of example, the plasma torch of the preheater 34 may be a water cooled, double enveloped plasma torch with swirled gas operation. Of course, another plasma torch or heater may also be used without deviating from the scope of the present invention. The surface of the particles is preferably heated by the preheater 34 to a spheroidization temperature of, for example 2000 to 3500° Celsius by passing through the plume 26 of the preheater 34. The particles exit the plasma plume 26 with a diameter of from approximately 50 to 500 microns, and more preferably from about 50 to 300 microns. Of course the diameter of the particles may be larger or smaller than the stated ranges while still remaining within the scope of the invention.

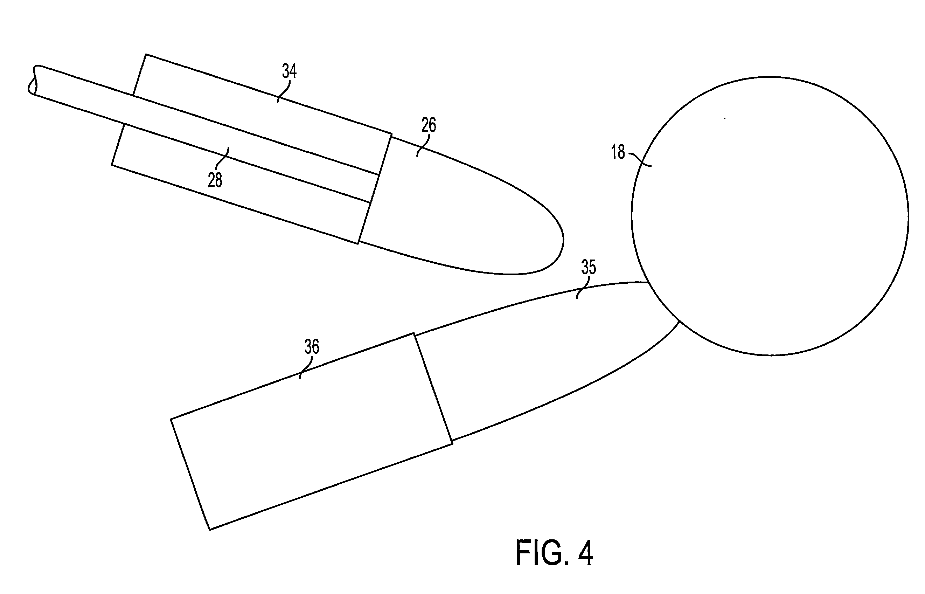

An alternative embodiment of the injector 28 and the preheater 34 is illustrated in Figure 4. As shown, the injector 28 is incorporated into the preheater 34 such that the stream of gas and particles is carried along a longitudinal axis of the preheater 34. The stream of gas and particles is then injected directly into the plume 26.

As shown in Figures 1 and 3, the gas and particles pass through a plasma plume 35 from a plasma torch 36 after passing through the plume 26 from the preheater 34. The plasma torch 36 is preferably located near the preheater 34 and provides the plasma plume 35 which heats the particles exiting the preheater 34 to a temperature at which the particles may be fused. By way of example, the plasma torch 36 may be a water cooled, double enveloped plasma torch employing swirled gas operation. Of course, other plasma torches or heat supplies may also be used without deviating from the scope of the present invention. The plume 35 from the plasma torch 36 directs the particles toward, and deposits the particles onto, the primary preform 20. Because the particles deposited onto the primary preform 20 are generally spherical in shape and have a generally uniform size, the particles are efficiently and densely packed onto the primary preform 20. After depositing the particles onto the primary preform 20, the plasma torch 36 further heats the particles thereby fusing the particles into the uniform initial overcladding layer 22 on the surface of the primary preform 20. (See Figure 2). During the overcladding operation, the primary preform 20 is rotated by the supports 16 of the centerpiece 14 while the centerpiece 14 is controlled by the controller 25 to travel adjacent to the preheater 34 and the plasma torch 36 for a distance of approximately the length of the preform 18. By this arrangement, the entire length and circumference of the primary preform 20 is overclad with the initial overcladding layer 22. After the centerpiece 14 has moved the length of the preform 18, the controller 25 controls the preform support 12 to move the centerpiece 14, and thus the preform 18, a predetermined distance away from the plasma torch 36. For example, the centerpiece 14, and the preform 18, may be moved about 3 millimeters along the longitudinal axis of the plasma torch 36 in a direction away from the plasma torch 36. Of course, the centerpiece 14, and preform 18, may be moved any other predetermined distance. In this manner the outer surface of the preform 18 is maintained at the predetermined distance from the plasma torch 36.

The preceding discussion explains in detail the deposition of the initial overcladding layer 22 onto the primary preform 20. Subsequent overcladding layers 24 may be added on top of the initial overcladding layer 22 in a similar manner. Specifically, the centerpiece 14, carrying the preform 18, is controlled by the controller 25 to reverse direction and move in the direction from which the centerpiece 14 previously traveled while depositing another layer of particles onto the preform 18. The preform 18 is rotated about its longitudinal axis as the centerpiece 14, and the preform 18, are moved parallel to the longitudinal axis of the preform 18. As the centerpiece 14 and the preform 18 travel in the reverse direction the particle reservoir 30 continues to provide particles to the injector 28 and the particles are entrained in the gas stream provided by the gas supply 32. The entrained particles exit the injector 28 and enter the plume 26 from the preheater 34. When passing through the plume 26 from the preheater 34 the relatively small particles are evaporated and the remaining particles are spheroidized, thereby reducing the particles' size and shape distributions. After exiting the plume 26 from preheater 34, the spheroidized particles enter the plasma plume 35 from plasma torch 36. The plasma plume 35 from plasma torch 36 further heats the particles, then deposits and fuses the particles onto the initial overcladding layer 22 while the preform 18 is rotated about its longitudinal axis by supports 16. After the centerpiece 14, and the preform 18, have reached the initial position, the controller 25 controls the preform support 12 to move the centerpiece 14, and the preform 18, the predetermined distance away from the plasma torch 36. Such overcladding operations may be repeated any desired number of times to create a preform 18 having the desired dimensions and characteristics. For example, the perform 18 may have from 2 to 50 overcladding layers, or more, and more preferably may have 8 to 12 layers. Of course, the number of layers is not restricted to these numbers and more or fewer layers may also be deposited while still remaining within the scope of the invention.

Although the depositing operation has been described above as depositing particles to form a subsequent overcladding layer 24 when moving in a reverse direction, the present invention also encompasses returning the centerpiece 14, and the preform 18, to the initial start position before beginning the subsequent overcladding operation. Specifically, the centerpiece 14 may reverse direction after forming the initial overcladding layer 22 and may be controlled by the controller 25 to travel parallel to the longitudinal axis of the preform 18 to the initial position without depositing the subsequent overcladding layer 24. After the centerpiece 14 reaches the initial position the centerpiece 14 may be controlled to again reverse direction and the subsequent overcladding layer 24 may be deposited starting from the initial position in the manner previously discussed.

The overcladding layers 22 and 24 may be formed into any predetermined thickness by controlling operating parameters such as the mass flow rate of the particles and the velocity of the centerpiece 14 with respect to the preheater 34 and the plasma torch 36. In this manner, the preform 18 may be built up to any predetermined diameter. Also, the preheater 34, the plasma torch 36 and the centerpiece 14 may be controlled by the controller 25 to deposit an overcladding layer along only a predetermined length of the preform 18. Thus, localized fluctuations in the diameter of the preform 18 may be normalized. Further, the rotation of the preform 18 and the movement of the centerpiece 14 may be controlled to deposit particles on limited areas along the circumference of the preform 18 in order to, for example, selectively build-up portions of the preform 18.

Although specific embodiments of the present invention have been described above in detail, it will be understood that this description is merely for illustration purposes. Various modifications of and equivalent structures corresponding to the disclosed aspects of the preferred embodiments in addition to those described above may be made by those skilled in the art without departing from the spirit of the present invention which is defined in the following claims, the scope of which is to be accorded the broadest interpretation so as to encompass such modifications and equivalent structures.

## Claims

1. A preform overcladding device comprising:
an injector for providing particles having a predetermined material;
a preheater for preheating the particles provided by said injector; and
a heater for heating and depositing onto a preform the particles preheated by said preheater.

2. The preform overcladding device as recited in claim 1, wherein said injector provides particles selected from a group consisting of quartz and silica.

3. The preform overcladding device as recited in claim 1, wherein said preheater preheats the particles to at least a temperature of 2000° Celsius.

4. The preform overcladding device as recited in claim 1, wherein said preheater preheats the particles to at least a temperature of 3000° Celsius.

5. The preform overcladding device as recited in claim 1, wherein said preheater lessens a size distribution of the particles provided by said injector by heating the particles.

6. The preform overcladding device as recited in claim 5, wherein said preheater evaporates a portion of the particles provided by said injector by heating the particles.

7. The preform overcladding device as recited in claim 1, wherein said preheater reduces a shape distribution of the particles provided by said injector.

8. The preform overcladding device as recited in claim 7, wherein said preheater spheroidizes a portion of the particles provided by said injector.

9. The preform overcladding device as recited in claim 1, wherein said heater further heats the particles preheated by said preheater.

10. The preform overcladding device as recited in claim 1, wherein at least one of said preheater and said heater is a plasma torch.

11. The preform overcladding device as recited in claim 1, wherein at least one of said preheater and said heater is a double enveloped plasma torch using a swirled gas.

12. The preform overcladding device as recited in claim 1, further comprising a gas supply for supplying gas to said injector.

13. The preform overcladding device as recited in claim 12, wherein the gas is at least one of air, a fluorinated gas and a chlorinated gas.

14. The preform overcladding device as recited in claim 1, further comprising a support for performing relative movement between the preform and said heater during deposition of the particles.

15. The preform overcladding device as recited in claim 14, further comprising a central processing unit for controlling said support.

16. A method for overcladding a preform, comprising the steps of:
injecting particles having a predetermined material;
preheating the particles provided during said injecting step; and
heating and depositing onto a preform the particles preheated during said preheating step.

17. The method for overcladding a preform as recited in claim 16, wherein said injecting step provides particles selected from the group consisting of quartz and silica.

18. The method for overcladding a preform as recited in claim 16, wherein said preheating step preheats the particles to at least a temperature of 2000° Celsius.

19. The method for overcladding a preform as recited in claim 16, wherein said preheating step preheats the particles to at least a temperature of 3000° Celsius.

20. The method for overcladding a preform as recited in claim 16, wherein said preheating step reduces a size distribution of the particles.

21. The method for overcladding a preform as recited in claim 20, wherein said preheating step evaporates a portion of the particles.

22. The method for overcladding a preform as recited in claim 16, wherein said preheating step reduces a shape distribution of the particles.

23. The method for overcladding a preform as recited in claim 22, wherein said preheating step spheroidizes a portion of the particles.

24. The method for overcladding a preform as recited in claim 16, wherein said heating and depositing step further includes fusing together on the preform the particles preheated during said preheating step.

25. The method for overcladding a preform as recited in claim 16, further comprising the step of supplying a gas to an injector.

26. The method for overcladding a preform as recited in claim 25, wherein the gas is at least one of air, a fluorinated gas and a chlorinated gas.

27. The method for overcladding a preform as recited in claim 25, further comprising the step of entraining the particles in the gas.

28. The method for overcladding a preform as recited in claim 16, further comprising the step of performing relative movement between the preform and a heater during deposition of the particles.

29. A preform overcladding device comprising:
injecting means for providing particles having a predetermined material;
preheating means for preheating the particles provided by said injecting means; and
heating means for heating and depositing onto a preform the particles preheated by said preheating means.

30. The preform overcladding device as recited in claim 29, wherein said injecting means provides particles selected from a group consisting of quartz and silica.

31. The preform overcladding device as recited in claim 29, wherein said preheating means preheats the particles to at least a temperature of 2000° Celsius.

32. The preform overcladding device as recited in claim 29, wherein said preheating means preheats the particles to at least a temperature of 3000° Celsius.

33. The preform overcladding device as recited in claim 29, wherein said preheating means lessens a size distribution of the particles provided by said injecting means by heating the particles.

34. The preform overcladding device as recited in claim 33, wherein said preheating means evaporates a portion of the particles provided by said injecting means by heating the particles.

35. The preform overcladding device as recited in claim 29, wherein said preheating means reduces a shape distribution of the particles provided by said injecting means.

36. The preform overcladding device as recited in claim 35, wherein said preheating means spheroidizes a portion of the particles provided by said injecting means.

37. The preform overcladding device as recited in claim 29, wherein said heating means provides heat to fuse together on the preform the particles preheated by said preheating means.

38. The preform overcladding device as recited in claim 29, wherein at least one of said preheating means and said heating means is a plasma torch.

39. The preform overcladding device as recited in claim 29, wherein at least one of said preheating means and said heating means is a double enveloped plasma torch using a swirled gas.

40. The preform overcladding device as recited in claim 29, further comprising gas supply means for supplying gas to said injecting means.

41. The preform overcladding device as recited in claim 40, wherein the gas is at least one of air, a fluorinated gas and a chlorinated gas.

42. The preform overcladding device as recited in claim 29, further comprising support means for performing relative movement between the preform and said heating means during deposition of the particles.
